# FASCICULE DE BREVET EUROPEEN

(11) **EP 0 750 840 B1**
(45) Date de publication et mention de la délivrance du brevet: **01.09.1999**
(21) Numéro de dépôt: 96450018.5
(22) Date de dépôt: 28.06.1996
(51) Int. Cl.: A01K 1/03

(54) **Structure d'accueil pour animaux de compagnie, du type garderie**
Haustiergarten
Housing for keeping pets

(30) Priorité: 30.06.1995 FR 9508145
(43) Date de publication de la demande: 02.01.1997
(73) Titulaire: Barets, Denis, 64600 Anglet (FR)
(72) Inventeur: Cahuzac, Eric, 64200 Biarritz (FR); Barets, Denis, 64600 Anglet (FR)
(74) Mandataire: Thébault, Jean-Louis

(56) Documents cités:
- FR-A- 2 481 884
- FR-A- 2 682 853
- FR-A- 2 710 235

## Description

La présente invention a pour objet une structure d'accueil pour animaux de compagnie, du type garderie.

On sait que les propriétaires d'animaux de compagnie se voient refuser l'accès à certains établissements au motif que les animaux n'y sont pas admis. C'est le cas des lieux publics comme les musées, monuments, jardins, hôpitaux ou des lieux privés comme certains hôtels ou restaurants, certains commerces et plus spécialement les grandes surfaces, ceci pour des raisons évidentes d'hygiène.

Une solution consiste pour les propriétaires à se séparer de leur animal pendant un laps de temps qui peut être important, en laissant l'animal au domicile, ce qui est un moindre mal pour l'animal mais qui peut poser des problèmes à certains propriétaires, surtout lorsqu'il s'agit de personnes âgées.

Certains propriétaires, moins scrupuleux, mals informés ou peu soucieux, laissent leur animal dans le véhicule. Lorsqu'il fait très chaud, et que les précautions minimales n'ont pas été respectées, l'animal peut souffrir gravement, voire mourir.

Une autre solution consiste à confier son animal à des personnes pour le garder, ce qui est la meilleure solution mais pas la plus simple. Il faut trouver une personne de confiance, cela crée une contrainte de temps et génère une dette morale, sans compter que l'opération est difficilement renouvelable périodiquement.

Certaines grandes surfaces ont pu constater qu'une frange de clientèle éprouvait des difficultés à venir s'approvisionner dans leurs rayons, à cause de ces problèmes d'animaux notamment.

D'un autre côté, dans ces lieux, les commerçants ou personnels concernés hésitent à prévoir un investissement pour assurer la garde des animaux de compagnie car il faut le répercuter à la clientèle sur le prix de la marchandise, d'une part, et il faudrait pouvoir disposer d'un matériel adéquat, d'autre part, mais surtout les commerçants et les personnels concernés savent qu'ils ont à assumer les frais pour l'entretien de tels matériels.

D'autres contraintes s'ajoutent aux premières qui viennent d'être exposées, notamment :
- l'aspect esthétique de la structure pour permettre une intégration à proximité immédiate du lieu, sans dépareiller,
- le confort minimum offert aux animaux,
- la sécurité, et
- la personnalisation et la reconnaissance du couple propriétaire-animal.

On sait aussi que sur les lieux de vente des grandes surfaces, la publicité directe de produits de consommation est interdite hormis l'enseigne du lieu de vente, si bien qu'il peut être attractif de disposer d'une surface complémentaire d'affichage.

On connaît par la demande de brevet FR-A-2 710 235 un abri pour animaux domestiques, compartimenté en stalles, surmonté d'une toiture et comprenant des moyens de nettoyage par buses avec des moyens d'évacuation des eaux de nettoyage par canalisations. Cet abri a une taille importante du type bâtiment compartimenté en box.

La demande de brevet FR-A-2 481 884 décrit une cage-abri pour animaux domestiques du type avec une ossature métallique supportant des parois latérales et arrières pleines, des faces supérieures et avant grillagées.

La demande FR-A-2 682 853 décrit un logement pour animaux prévu pour être disposé dans un chenil.

L'invention a donc pour but de répondre aux problèmes posés en proposant une structure d'accueil pour animaux de compagnie, dont la présence est compatible près des lieux de commerce et de visite, qui donne confiance aux propriétaires, qui est accepté par les animaux, qui permet l'association propriétaire-animal, dont les investissements tant en réalisation qu'en entretien, sont amortissables, qui génère des surfaces complémentaires d'affichage publicitaire, et qui est d'une grande fiabilité.

L'invention vise aussi à permettre au propriétaire de l'animal une pratique aisée de l'abri, aussi la structure selon l'invention doit être munie de moyens de fermeture individuels et personnalisés. De plus, pour le confort de l'animal, il est prévu selon l'invention une protection thermique.

A cet effet, la structure d'accueil pour animaux de compagnie, selon l'invention, en libre-service, notamment prévue pour être disposée à proximité immédiate de commerces, lieux publics et plus généralement de tout lieu où la présence d'animaux de compagnie est interdite se caractérise en ce qu'elle comprend un volume habitable clos muni d'au moins une ouverture avec une porte, ladite porte étant munie de moyens de fermeture individuels et personnalisés.

Selon une autre caractéristique, la partie supérieure du volume habitable clos comprend une protection thermique destinée à réguler la température interne dudit volume habitable.

Cette protection thermique est une jardinière.

Le plancher du volume habitable clos est incliné et raccordé à des moyens d'évacuation. Il est équipé également de moyens de nettoyage automatique, tels que des buses alimentées en eau sous pression.

Selon une autre caractéristique, le volume habitable clos est équipé d'un récipient d'eau destiné à la consommation par l'animal de compagnie.

Il est aussi prévu des moyens de chauffage et des moyens d'éclairage.

Selon un perfectionnement, la structure comprend un automate programmable simplifié pour la commande des différents cycles de nettoyage, d'ouverture/fermeture ainsi que des différents accessoires tels que chauffage et lumière.

L'invention est maintenant décrite en détail selon un mode de réalisation particulier, non limitatif, en regard des dessins annexés sur lesquels les figures représentent :
- figure 1, une vue en perspective d'une structure d'accueil selon l'invention,
- figure 2, une vue de détail d'un mode de réalisation avec bac, et
- figure 3, une vue de dessus en coupe par un plan horizontal de la structure de la figure 1.

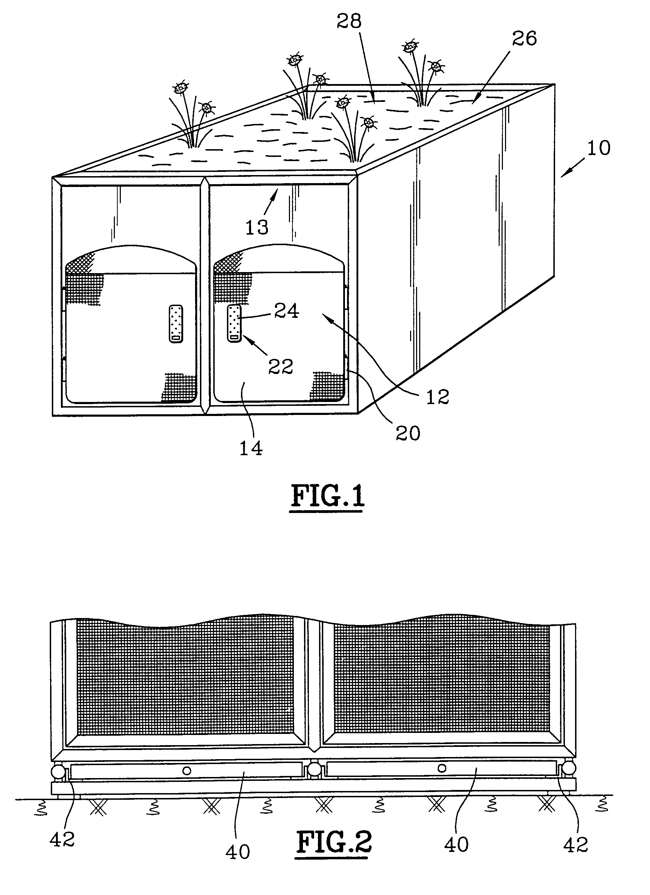

Sur la figure 1, on a représenté un ensemble de quatre structures d'accueil 10 selon l'invention, regroupées en un module. Chaque structure d'accueil est sensiblement un cube 12, fermé sur trois de ses faces latérales, dans l'exemple de réalisation représenté, la quatrième face comportant une porte 14.

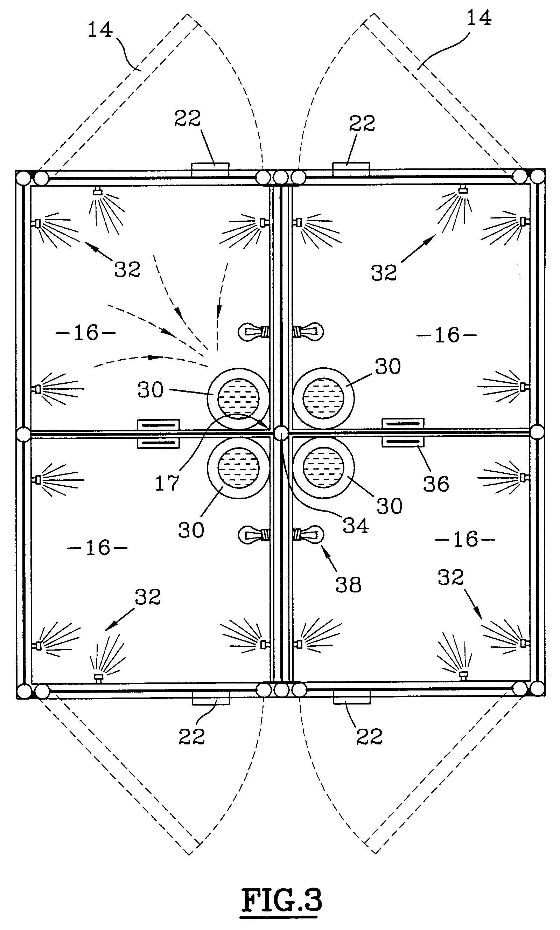

Chaque structure comprend un plancher 16 et un toit 18 (voir figure 3).

Cette structure est prévue pour recevoir un animal en tant que locataire temporaire de ladite structure.

La porte 14 est du type ajouré, par exemple en prévoyant un cadre à l'intérieur duquel est tendu un grillage, en sorte de laisser passer la lumière, d'une part, tout en interdisant le passage des pattes ou de la gueule de l'animal.

Cette porte est réalisée pivotante dans le mode représenté, grâce à des gonds 20.

De plus, il est prévu des moyens de fermeture 22, en l'occurrence une serrure à code 24.

Le toit 18 est surmonté avantageusement d'un élément de décoration 26, plus particulièrement une jardinière 28, élément qui participe activement à l'isolation thermique, permettant de réguler les différences de température et surtout d'absorber une partie du rayonnement en cas de fortes chaleurs. Les faces latérales n'étant pas munies de portes et visibles de l'extérieur porteront avantageusement une dénomination et/ou un logo commercial, cette publicité présentant un intérêt certain, comme cela sera expliqué ultérieurement.

A l'intérieur de chacune de ces structures, il est prévu un récipient d'eau à la disposition des animaux locataires. On a également représenté, sur cette même figure 3, des moyens de nettoyage 32, sous forme de buses de lavage sous pression, la largeur des jets et l'orientation étant prévues pour couvrir l'intégralité de la surface du plancher 16 de chacune des structures. Ces planchers sont avantageusement réalisés de façon inclinée, avec un pli central permettant le recueil des liquides et conduisant à un point bas situé dans un angle de la cage, plus particulièrement le point central de l'ensemble des quatre structures. Au droit de ce point bas, il est ménagé une canalisation 34 d'évacuation des liquides et des éventuelles déjections animales. On peut également remarquer, sur cette même figure 3, des moyens de chauffage 36 et des moyens d'éclairage 38 visant à améliorer le confort de l'animal en cas de grand froid et/ou de journée courte. Bien entendu, le liquide projeté peut comprendre un produit désinfectant.

Selon un autre mode de réalisation, représenté sur la figure 2, le plancher 16 comprend des tiroirs 40 amovibles, montés coulissants dans des glissières 42 de façon à pouvoir les nettoyer.

Le fonctionnement d'une telle structure est indiqué ci-après.

Un propriétaire se rendant dans une grande surface avec son animal de compagnie, repère une structure d'accueil vide dans laquelle il fait entrer l'animal après avoir ouvert la porte, libre à l'ouverture dès que la structure est inoccupée et nettoyée.

Suivant le degré de sophistication des moyens de fermeture, il est prévu une clé mécanique, une clé électronique ou un code confidentiel.

Dans le mode de réalisation représenté, il s'agit d'une serrure à code, chaque propriétaire pouvant programmer lui-même son propre code ainsi que cela existe pour des consignes de gare, par exemple. On notera que, dans le cas où le propriétaire aurait oublié le code, un responsable pourra toujours procéder à l'ouverture de la cage, après contrôle de la propriété de l'animal par le propriétaire réclamant.

Le propriétaire effectue ses différents achats, son animal étant logé pendant la durée limitée correspondante, dans des conditions de confort suffisantes pour permettre cette attente.

Le propriétaire récupère, au dernier moment, son animal, sans avoir été dérangé pendant ses courses tout en ayant pu l'emmener avec lui jusqu'au lieu dit.

On notera que, dans les structures d'accueil, seule de l'eau est proposée à l'animal afin de ne pas perturber son alimentation nécessairement différente des autres locataires.

La publicité sur les faces latérales pleines de la structure permet de faire payer l'investissement par l'annonceur. Celui-ci sera avantageusement choisi parmi les fournisseurs de produits pour animaux.

Il est nécessaire de prévoir un entretien régulier des structures d'accueil par les agents de nettoyage de la grande surface en sorte de compléter les différents nettoyages automatiques. Les frais engendrés sont à la charge des grandes surfaces ou plus généralement des commerçants ou encore des lieux publics fréquentés.

Le récipient contenant l'eau peut lui-même être nettoyé par un jet d'eau sous pression dès que la structure est libérée de son locataire, avec une temporisation intermédiaire, un groom hydraulique assurant la fermeture de la porte. Durant la phase de nettoyage, la structure d'accueil n'est pas accessible. Aussi, les durées de lavage devront être réduites en temps, en sorte de mettre les structures d'accueil rapidement à la disposition des propriétaires.

La combinaison d'une telle structure d'accueil avec des moyens de fermeture personnalisés pour loger temporairement des animaux est nouvelle et conduit à des avantages, tant pour les propriétaires que pour les commerçants ou personnels des lieux publics fréquentés. Les animaux eux-mêmes profitent d'un confort intéressant, en évitant tout danger, notamment des expositions à des températures très élevées telles que celles atteintes dans un habitacle de véhicule sous le soleil, vitres fermées.

On remarque également que les frais pris en charge par les annonceurs et par les commerçants ou les organismes gérant les lieux publics permettent de rendre gratuites les prestations proposées aux propriétaires.

Selon un perfectionnement, la structure comprend un automate programmable simplifié pour la commande des différents cycles de nettoyage, d'ouverture/fermeture ainsi que des différents accessoires tels que chauffage et lumière.

Bien entendu, les parois latérales ont été décrites et représentées comme étant pleines pour la simplification des explications mais elles peuvent être ajourées comme la porte pour améliorer la circulation de l'air notamment.

De même, les cloisons entre les structures d'un même module peuvent être des cloisons du type insonorisantes.

## Revendications

1. Structure d'accueil pour animaux de compagnie, en libre-service, notamment prévue pour être disposée à proximité immédiate de commerces, lieux publics et plus généralement de tout lieu où la présence d'animaux de compagnie est interdite, comprenant un volume habitable clos (12), constitué directement de faces latérales, d'un plancher (16) et d'un toit (18), l'une des faces étant munie d'au moins une ouverture avec une porte (14), caractérisé en ce que la porte (14) est munie de moyens de fermeture (22) individuels et personnalisés, et en ce que la partie supérieure du volume habitable clos (12) comprend une protection thermique (26) destinée à réguler la température interne dudit volume habitable.

2. Structure d'accueil pour animaux de compagnie selon la revendication 1, caractérisée en ce que la protection thermique est une jardinière (28).

3. Structure d'accueil pour animaux de compagnie selon l'une quelconque des revendications précédentes, caractérisée en ce que le plancher (16) du volume habitable clos (12) est incliné et raccordé à des moyens d'évacuation.

4. Structure d'accueil pour animaux de compagnie selon la revendication 3, caractérisée en ce que le plancher (16) est équipé également de moyens (32) de nettoyage automatique, tels que des buses alimentées en eau sous pression.

5. Structure d'accueil pour animaux de compagnie selon l'une quelconque des revendications précédentes, caractérisée en ce que le volume habitable clos (12) est équipé d'un récipient d'eau (30) destiné à la consommation par l'animal de compagnie.

6. Structure d'accueil pour animaux de compagnie selon l'une quelconque des revendications précédentes, caractérisée en ce qu'elle comprend des moyens de chauffage (36) et des moyens d'éclairage (38).

7. Structure d'accueil pour animaux de compagnie selon l'une quelconque des revendications précédentes, caractérisée en ce qu'elle comprend un automate programmable simplifié pour la commande des différents cycles de nettoyage, d'ouverture/fermeture ainsi que des différents accessoires tels que chauffage et lumière.

## Claims

1. Structure for accommodating pets, for the use of the owner, notably designed to be disposed in the immediate vicinity of shops, public places and more generally any place where the presence of pets is prohibited, comprising a closed habitable volume (12), formed directly by side faces, a floor (16) and a roof (18), one of the faces being provided with at least one opening with a door (14), characterised in that the door (14) is provided with individual personalised closure means (22), and in that the top part of the closed habitable volume (12) comprises thermal protection (26) intended to regulate the internal temperature of said habitable volume.

2. Structure for accommodating pets according to Claim 1, characterised in that the thermal protection is a flower stand (28).

3. Structure for accommodating pets according to either one of the preceding claims, characterised in that the floor (16) of the closed habitable volume (12) is sloping and connected to discharge means.

4. Structure for accommodating pets according to Claim 3, characterised in that the floor (16) is also equipped with automatic cleaning means (32), such as nozzles fed with pressurised water.

5. Structure for accommodating pets according to any one of the preceding claims, characterised in that the closed habitable volume (12) is equipped with a water receptacle (30) intended for consumption by the pet.

6. Structure for accommodating pets according to any one of the preceding claims, characterised in that it comprises heating means (36) and lighting means (38).

7. Structure for accommodating pets according to any one of the preceding claims, characterised in that it comprises a simplified automatic programmable controller for controlling the different cleaning and opening/closing cycles as well as the various accessories such as heating and light.

## Patentansprüche

1. Aufnahmebau für mitgeführte Tiere zur selbständigen Benutzung, der insbesondere dazu vorgesehen ist, in unmittelbarer Nähe von Geschäften, öffentlichen Orten und allgemeiner von allen Orten, an denen die Anwesenheit von mitgeführten Tieren verboten ist, aufgestellt zu werden, mit einem geschlossenen Unterbringungsraum (12), der einfach aus Seitenflächen, einem Boden (16) und einem Dach (18) gebildet ist, wobei eine der Flächen mit wenigstens einer Öffnung mit einer Tür (14) versehen ist, dadurch gekennzeichnet, daß die Tür (14) mit einzelnen und individualisierten Verschlußmitteln (22) versehen ist und daß der obere Teil des geschlossenen Unterbringungsraums (12) einen Wärmeschutz (26) aufweist, der dazu bestimmt ist, die Innentemperatur des Unterbringungsraums zu regulieren.

2. Aufnahmebau für mitgeführte Tiere nach Anspruch 1, dadurch gekennzeichnet, daß der Wärmeschutz ein Blumenkasten (28) ist.

3. Aufnahmebau für mitgeführte Tiere nach einem der vorangehenden Ansprüche, dadurch gekennzeichnet, daß der Boden (16) des geschlossenen Unterbringungsraums (10) geneigt und mit Entleerungsmitteln verbunden ist.

4. Aufnahmebau für mitgeführte Tiere nach Anspruch 3, dadurch gekennzeichnet, daß der Boden (16) außerdem mit automatischen Reinigungsmitteln (32), wie etwa Düsen, die mit unter Druck stehendem Wasser versorgt werden, ausgerüstet ist.

5. Aufnahmebau für mitgeführte Tiere nach einem der vorangehenden Ansprüche, dadurch gekennzeichnet, daß der geschlossene Unterbringungsraum (12) mit einem Behälter (30) für Wasser ausgerüstet ist, das für den Verbrauch durch das mitgeführte Tier vorgesehen ist.

6. Aufnahmebau für mitgeführte Tiere nach einem der vorangehenden Ansprüche, dadurch gekennzeichnet, daß dieser Beheizungsmittel (36) und Beleuchtungsmittel (38) enthält.

7. Aufnahmebau für mitgeführte Tiere nach einem der vorangehenden Ansprüche, dadurch gekennzeichnet, daß dieser einen vereinfachten programmierbaren Automaten für die Steuerung der verschiedenen Reinigungszyklen, des Öffnens/Schließens sowie der verschiedenen Zubehörteile, wie etwa der Beheizung und Beleuchtung, enthält.
